# EUROPEAN PATENT SPECIFICATION

(11) **EP 4 302 611 B1**
(45) Date of publication and mention of the grant of the patent: **15.10.2025**
(21) Application number: 22762658.7
(22) Date of filing: 25.02.2022
(51) Int. Cl.: A23B 2/00, A23B 2/10, A23B 2/30, B01J 3/04

(54) **CONTAINER FOR HIGH-PRESSURE PROCESSING AT MODERATE TEMPERATURES**
BEHÄLTER FÜR HOCHDRUCKBEHANDLUNG BEI MÄSSIGEN TEMPERATUREN
CONTENANT POUR LE TRAITEMENT À HAUTE PRESSION À DES TEMPÉRATURES MODÉRÉES

(30) Priority: 05.03.2021 ES 202130195
(43) Date of publication of application: 10.01.2024
(73) Proprietor: Hiperbaric, S.A., 09001 Burgos (ES)
(72) Inventor: TONELLO SAMSON, Carole, 09001 BURGOS (ES); VILLALBA POZA, Ricardo, 09001 BURGOS (ES); HERNANDO SAIZ, Andrés, 09001 BURGOS (ES)
(74) Representative: Herrero & Asociados, S.L.
(86) International application number: PCT/ES2022/070102
(87) International publication number: WO 2022/184952

(56) References cited:
- WO-A1-2011/091860
- WO-A1-2015/121510
- WO-A1-2017/031552
- WO-A1-2021/195284
- ES-A1- 2 692 351
- GB-A- 2 367 997
- US-A1- 2002 192 109
- US-A1- 2006 180 036
- US-A1- 2012 304 872
- US-A1- 2019 254 313

## Description

### TECHNICAL FIELD

The present invention relates to the high pressure processing (HPP) at moderate temperature of products such as food, beverage, cosmetic, pharmaceutical, or biological substances using the carrier of the invention in a horizontal HPP machine.

### BACKGROUND OF THE INVENTION

High pressure processing (HPP) is a technology that uses high hydrostatic pressure to process a wide range of products such as food, beverage, cosmetic, pharmaceutical, or biological substances. Typical HPP conditions are in the range of 250 to 600 MPa (2500 to 6000 bar or 36,000 to 87,000 psi) for a few seconds or minutes at chilled or room temperature.

Since 2019 there are two main processing concepts regarding HPP: prepackaged products (called "in-pack HPP") and liquids in-bulk (called "in-bulk HPP"). The in-pack HPP processing is the only one requiring the use of carriers. It is a batch post-packaging process that comprises different steps. Firstly, the products are loaded in one or several carriers (product loading step), also known as canisters, baskets, or containers. Then, they are introduced in the high pressure processing chamber or vessel (carrier loading step). The vessel is then filled with the pressurizing fluid at low pressure (vessel pre-filling step), typically water. Afterwards, the vessel is closed by plugs and wedges at each end and the pressurizing fluid is pumped into the vessel through a system of high pressure intensifiers, or high pressure pumps, until it reaches the desired pressure (pressure build-up step). The pressure is maintained for a few seconds or minutes (pressure holding time step). Then, the pressure is released in a few seconds (depressurization step), the machine is opened (plugs and wedges are removed) and the product carriers are unloaded from the machine (carrier unloading step). Finally, the products are unloaded from the carriers (product unloading step). This sequence of steps, except product loading and unloading, is usually called a "HPP cycle".

The current industrial HPP machines have a horizontal design. Compared to vertical design, it improves traceability and facilitates carrier loading and unloading steps.

Since HPP technology relies on isostatic/hydrostatic pressure, the pressure generated inside the vessel is distributed simultaneously and uniformly in all directions within the product. Therefore, the inactivation of microorganisms and/or enzymes is not dependent on the size or shape of the product and/or packaging. The benefit of HPP is the increase of safety and shelf-life of products, and in some cases macromolecules modifications, while retaining most of their original sensory, nutrient, and functional properties. This technology is widely spread and there are HPP commercial applications in almost all food categories such as avocado products and other plant-based dips, meat and seafood products, ready-to-eat meals, dairy and fruit juices, and other beverages (González-Angulo *et al.,* 2021). There are also several biological, cosmetic and pharmaceutical commercial products processed by HPP.

HPP is recognized as a non-thermal process, as the pressurizing fluid and products are chilled or at room temperature at the beginning of the cycle. Nevertheless, due to the compressibility of the pressurizing fluid, during the pressure build-up there is an increase in the temperature of said fluid as well as the product. Under adiabatic conditions (i.e. without heat exchange with the vessel and its closure(s) or plug(s)), the temperature of the pressurizing fluid (usually water) and water based-products raise about 3 °C per 100 MPa increase (Balasubramaniam *et al.,* 2015). The higher the initial temperature, the higher the increase of temperature. The temperature increase of both the pressurizing fluid and product due to adiabatic compression is fast and homogeneous (equal throughout the product), whereas the temperature of the vessel wall and the plugs does not change. This creates temperature gradients inside the vessel, caused by conduction and convection effects promoted by the contact of the pressurizing fluid with the vessel and plugs. Although gradients are small at low temperatures, they still exist within a standard HPP carrier, even if the vessel wall, processing fluid, and product are all set at 10 °C at the beginning of the cycle (Grauwet *et al.,* 2010). For very temperature-sensitive enzymes, in those conditions, the inactivation could be different depending on the location of the sample in the carrier. On the contrary, microorganisms' pressure inactivation at chilled or room temperature is less temperature-dependent, not being significantly different in the various locations of the carrier. The same is not observed when the temperature is high or when the starting temperature is above room temperature.

Conventional HPP technology, at chilled or room temperature, is suitable for many products. Nevertheless, a few products have some specific pressureresistant bacteria and enzymes. In these cases, the combination of pressure and heat can be useful for extra microbial inactivation as synergetic effects between pressure and temperature have been reported. This synergy allows achieving the desired inactivation levels by combining high pressure with mild or moderate temperatures, i.e. an initial temperature between 25 and 60 °C, versus the high temperatures typically used for traditional thermal treatments. Indeed, thermal pasteurization or sterilization require temperatures higher than 60 or 115 °C, respectively. Even they could require higher temperatures depending on the specific product and the processing time. Another advantage of the aforementioned pressure and temperature synergy is that adiabatic compression transmits heat quickly and homogeneously throughout the product, eliminates temperature gradients within the product, and allows the temperature of the product to return close to its initial value upon decompression. Consequently, this combined process notably reduces the time that the product is exposed at high temperature when compared to traditional thermal processing, and delivers improved quality products as the food retains better its nutritional and organoleptic properties.

An example of the combination of pressure and moderate heat can be seen in the patent AU 2016291298 B2. It describes a combination of high pressure (600 MPa) and temperature (initial temperature of 33-37 °C leading to a temperature of 50-55°C during the pressure holding step) that substantially reduces pathogen levels in milk. It is noteworthy that milk is commonly thermally processed at higher temperatures, which usually degrades some nutritional and sensorial properties. Combining high pressure and moderate temperature allows to better retain said properties.

Similarly to microorganisms, the synergetic effects of combined pressure and moderate heat usually result in a higher enzymatic inactivation. Said effects have already been reported in the literature. Using mango puree as an example, it has been reported that a pressure of 500 MPa applied for 2 min at 34°C during the pressure holding time step only inactivated 10% of pectin methylesterase (PME) and peroxidase (POD), and had no effect on polyphenol oxidase (PPO). However, when the same pressure and time conditions were applied at 59°C, it was reported inactivation of 65, 35, and 40%, of PME, POD, and PPO, respectively (Morales-de la Peña *et al.,* 2018).

Although there are many studies on the effects of HPP and temperature on microorganisms and enzymes in foods (Bermúdez-Aguirre *et al.,* 2016), its application has not reached a commercial-stage, mainly because of the technical difficulties to properly control temperature under high pressure and the high capital and/or operational costs that would be required.

There are two approaches or strategies to process under high pressure and temperature. The first one involves the development of specific industrial HPP machines capable of operating at high pressure and high temperature, which is very complex. Currently, there are no commercial units available for industrial purposes. The temperature homogeneity inside the high-pressure vessel, particularly for large volumes, is a great pending challenge for the high pressure machinery industry. For those reasons, there are only a few machines in the world equipped with temperature regulation systems of the vessel and plugs. Those are merely for research purposes in laboratories and pilot plants. The second approach implies the use of commercial HPP machines (without temperature control of the vessel and plugs) and insulated carriers. Those carriers allow pressure processing at high temperature by avoiding or minimizing heat loss from the products and the fluid surrounding them. They are very different from standard carriers used for HPP cycles at chilled or room temperature. As mentioned before, commercial in-pack HPP machines work in batches using carriers to place the products. Although there are many types, the most common carriers are usually made of a plastic material such as low-density polyethylene (LDPE). They are characterized by large openings on top, for easy loading and unloading of the products, and perforated walls, bottom, and sides, to facilitate the movement of the pressurizing fluid and drainage at the end of the cycle. During the process, heat exchange takes place among the vessel walls, the pressurizing fluid, and the products since these standard carriers are not designed to avoid temperature gradients. These small gradients are not an important parameter of the process when it starts at cold or room temperature. However, large temperature gradients need to be avoided when the temperature is one of the critical parameters of the process. Therefore, different strategies have been proposed to develop suitable insulated carriers for processes involving both high pressure and temperature.

US 9545122 B2 outlines an insulated watertight carrier (called feed tank) characterized by a double-wall with inner space filled with fluid, and a piston to transmit the pressure to the interior of the carrier. It contains temperature control electrical devices, which may allow for the combination of pressure with pulsed electric fields or ohmic heating. It is a very complex solution that can lead to reliability issues. Furthermore, the use of a piston raises the price of the carrier and complicates the product loading and unloading steps. Moreover, the double-wall reduces the usable volume for products, leading to a low filling ratio and consequently decreasing productivity and increasing processing cost. Additionally, the described carrier is heavy, so manual handling is not possible and it requires the use of a handling system.

AU 2016310416 B9 illustrates an insulated multi-layer carrier (called container) for pressurizing food products at high temperature. The principle behind this carrier is to fully insulate the pre-heated food products, whose temperature (of both the product and the carrier itself) further increases as a result of adiabatic compression heating. Since the carrier is watertight, the pressure inside is generated from the outside of the carrier and transmitted through a free piston located at one of its extremities, which also acts as a plug. This carrier effectively keeps the temperature inside (above 100 °C). Although this solution is less complex and expensive than US 9545122 B2, it is still heavy for manual operation and it does not solve the loading/unloading issues. Moreover, this multi-layer solution reduces the internal diameter of the carrier and so the usable volume for products.

US 7220381 B2, filed in 2001, describes a method for pressure processing a product under controlled temperature. Although what is claimed in this patent is the methodology used, an insulated carrier for the process is also described. The carrier has an insulating inner layer that acts as a barrier between the product and the vessel wall. This carrier is designed to be operated vertically as HPP machines were all vertically oriented twenty years ago. This solution does not work in a horizontal HPP machine. Moreover, the insulating inner layer reduces the usable volume for products, decreasing productivity and increasing the processing costs.

Overall, the possibility to enhance the HPP desirable effects by combining it with moderate temperature generates a lot of interest. However, the challenges related to the design and building of industrial machines capable of controlling high temperature under pressure minimizing temperature gradients, make their design very difficult. To allow the use of current HPP industrial machines in combination with temperature, some inventors have focused on the development of completely insulated carriers. However, so far, all the existent solutions are optimized for elevated temperature (superior to 100 °C, intended to sterilize products), rather than moderate temperatures. All of them describe carriers that are complex, heavy, expensive, with a lower filling ratio and /or not suitable for horizontal machines. Therefore, for moderate temperature, it would be desirable to design a simple, light, and inexpensive carrier suitable for horizontal processing, which does not reduce the filling ratio, and is easy to load and unload the products.

### DESCRIPTION OF THE INVENTION

The purpose of the present invention is to provide a carrier for high pressure processing of food, beverage, cosmetic, pharmaceutical, and/or biological products that solves the aforementioned drawbacks since it will enable to efficiently process products under high pressure and moderate temperature (initial temperature between 25 °C and 60 °C). It is specifically designed to operate horizontally, so it is a suitable solution to combine HPP and moderate temperature using current commercial HPP machines (horizontal and without temperature regulation of the machine's vessel and plugs).

The carrier of the invention comprises one or more parts that form a cylindrical body and an inner space, where the products and pressurizing fluid are accommodated, having one or more small openings longitudinally distributed through the carrier side wall. One or more pieces acting as ballast are mounted at the inner wall of the carrier on the opposite side of the openings. Said pieces are coated by one or several sheets of materials with higher adiabatic heating under compression than the pressurizing fluid.

In order to prevent the rotation of the carrier during the HPP cycle, the ballast pieces are attached to the intended inner bottom of the carrier, to lower its center of gravity below the center of buoyancy and preferably keeping both on the vertical line, to improve stability. Said ballast must be preferably made of plastic, so as not to damage the vessel in case of accidental contact, with a density higher than the one of the pressurizing fluid at any given moment. The ballast assures that the openings of the carrier are always facing up during the HPP cycle, because they are on the opposite side wall in an angle between 135° and 225°.

Convection affects greatly the process since there is a large difference between temperatures in the upper and lower parts of the vessel (more than 10 °C) during the pressure holding time. The reduced number of small openings in the carrier, preferably covering less than 1% of the total carrier surface, minimizes the loss of heat due to convection. Simultaneously, they are longitudinally distributed in order to allow the pressurizing fluid circulation and air release, avoiding collapse due to the filling and increase of pressure. Moreover, the upper openings not only allow the pressurizing fluid to flow suitably inwards the carrier but also assures that the fluid that enters the carrier comes from the upper part of the high-pressure vessel, which is hotter than the fluid of the lower part.

The ballast pieces are coated by one or more sheets of materials with higher adiabatic compression heating than pressurizing fluid under pressures of 100-800 MPa. Thermal conduction is limited since this coating acts as a barrier keeping the products farther from the bottom part of the vessel, which is the coldest area. This thermal coating also reduces the temperature gradient between the upper and lower part of the carrier, since it heats the pressurizing fluid at the bottom due to its adiabatic compression heating being higher than pressurizing fluid. Consequently, it keeps a homogeneous temperature distribution inside the carrier.

The carrier comprises one or more parts that form a cylindrical body and an inner space, so any of the existing closings for standard HPP carriers would be suitable, such as one lid at one sole end of the cylindrical body, two lids one at each end, a body formed by two semi-cylindrical parts that can pivot on a hinge to form a cylindrical carrier, etc.. Thus, although the carrier of the invention is not watertight, once loaded with the products the carrier is completely closed except for the aforementioned openings.

The carrier of the present invention shows many advantages compared to the previous state of the art and provides a reliable and efficient solution for the HPP processing at moderate temperature not achieved until now. It keeps the temperature of the products inside the carrier constant and homogeneous between the upper and lower part for the range of moderate temperatures, since it minimizes the loss of heat due to conduction and convection. Moreover, it allows processing using any size of HPP commercial machine, independently of the diameter of the vessel, and products with all kinds of packaging. Besides, since its walls are not thick, the carrier of the invention has a similar internal volume as a standard HPP carrier, therefore it keeps the productivity of a standard carrier. Furthermore, its implementation is simple and at least ten times less expensive than other approaches, such as insulated carriers or watertight canisters with a piston. The carrier of the invention is also lighter than those canisters so it can be manual handling as standard HPP carriers.

### DESCRIPTION OF THE FIGURES

In order to assist in a better understanding of the characteristics of the invention and to supplement this description, it is accompanied by the following figures as an integral part thereof, which by way of illustration and not limitation represent the following:
FIG. 1 shows an elevation longitudinal section of a preferred embodiment of the carrier of the invention.
FIG. 2 shows a transverse cross-section of a preferred embodiment of the carrier of the invention.
FIG. 3 shows a preferred embodiment of the carrier of the invention.
FIG. 4 shows a standard HPP carrier typically used in commercial HPP machines.
FIG. 5 shows a graphical representation of the temperature profile (°C) of the pressurizing fluid inside a standard carrier versus a carrier designed as described in the invention during a pressure cycle (600 MPa for 180 seconds of holding time), including the pressure build-up and depressurization steps.

### PREFERRED EMBODIMENT OF THE INVENTION

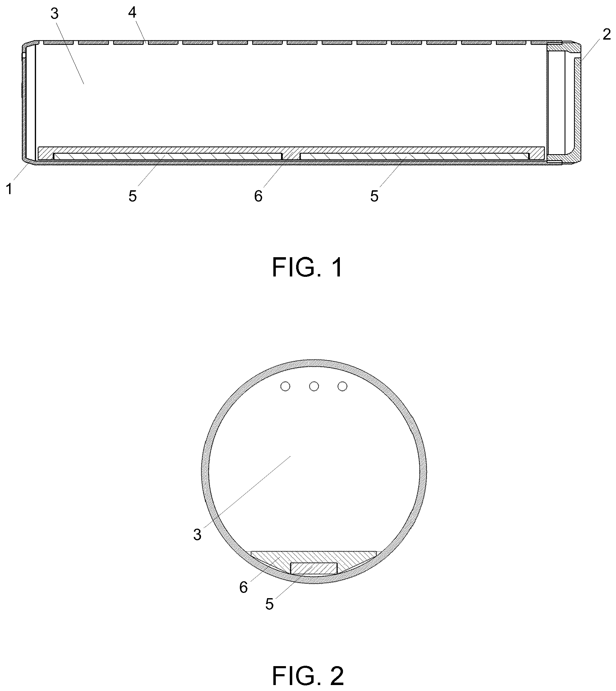

FIG. 1 shows a longitudinal view of a preferred embodiment of the carrier of the invention. It is comprised by two pieces, a chamber (1) and a lid (2), preferably made of low-density polyethylene (LDPE), that form a cylindrical body encapsulating the inner space (3) where the products to be processed are placed.

It is provided with a few small holes (4) arranged in one straight line and distributed along the length of the carrier side wall. On the opposite side, at 180° two pieces acting as ballast (5) are mounted at the inner wall of the carrier. These pieces are preferably made of high-density plastics such as polytetrafluoroethylene (PTFE), having a similar adiabatic compression to the one of the water (the most typical pressurizing fluid), so as not to act as heat sinks. Said pieces are coated by a sheet (6) of a material with adiabatic compression heating higher than t water. This sheet is preferably made of high-density polyethylene (HDPE), since it heats more than water under pressure during the HPP cycle, typically up to 600 MPa.

At the beginning of the HPP cycle, the carrier with the products is pushed inside the high-pressure vessel, with the ballast at the bottom. The vessel is then filled with water or pressurizing fluid. The air surrounding the products exits through the holes (4) at the top of the carrier when the pressurizing fluid flows inwards. Once full, pressurized water is pumped into the vessel to reach the desired pressure level. At any moment, the high-density ballast (5) prevents the rotation of the carrier, assuring the holes are always facing up ensuring that the water that flows inwards the carrier comes from the upper part of the vessel. During the pressurization step, the temperature of the pressurization water and product increases about 3 °C per 100 MPa increase due to adiabatic compression. The thermal coating (6) keeps the products away from the bottom part of the vessel, which is the coldest area. Additionally, it can warm up the water at the bottom of the carrier since the HDPE presents an adiabatic compression heating higher than water. Thus, the carrier of the invention retains the heat during the pressure holding time, keeping a steady and homogeneous distribution of temperature through all its inner space.

The carrier of the invention is specifically designed to operate horizontally, so it is a suitable solution to combine HPP (from 100 MPa to 800 MPa) and moderate temperature (initial temperature between 25 °C and 60 °C) using current commercial HPP machines (horizontal and without temperature regulation of the machine vessel and plugs).

In view of this description and the figures, the person skilled in the art will understand that the invention has been described according to certain preferred embodiments thereof, but that multiple variations may be introduced into said preferred embodiments without exceeding the object of the invention as has been claimed.

### EXAMPLE

One example is provided by way of illustration of embodiments of the invention and is not intended to limit or constrain the invention.

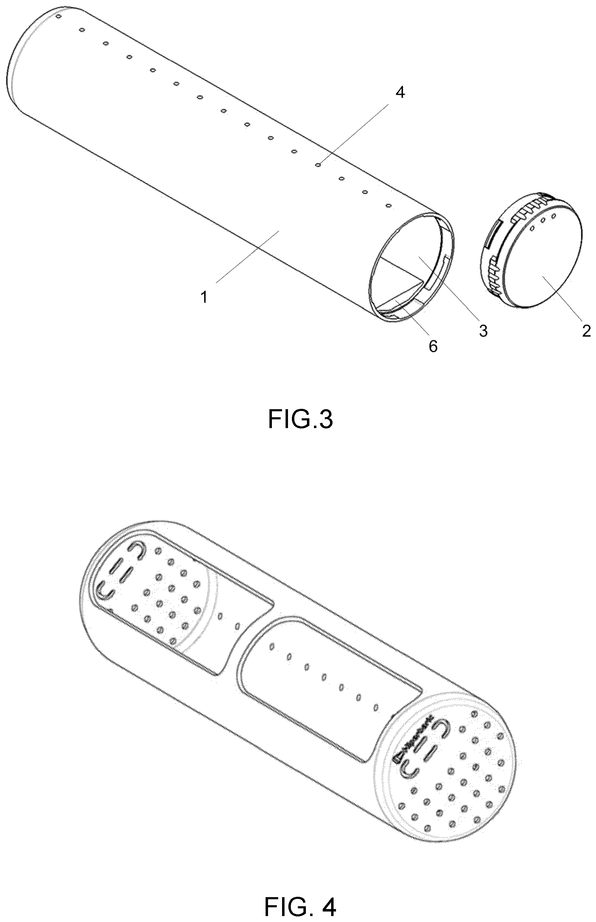

A standard carrier (FIG. 4) and a carrier designed as described in the invention (FIG. 3) were fully loaded with bottles containing a water-based liquid product (250 ml bottles) and pre-heated to 35-37 °C. The temperature of the pressurizing fluid (water) inside the carriers was measured and recorded using two wireless temperature probes, suitable to withstand high pressure, located exactly in the same place of both carriers.

Said probes are characterized by a watertight stainless steel body, designed to house and protect a data-logger and a battery from high pressure. The probes have two sides closed by plugs. One side where a thermocouple is connected to measure the temperature, and another with a fitted-through antenna to wirelessly download data from the data-logger to a receiver without opening the probe.

The carriers were then loaded into a HPP machine (Hiperbaric 55 model, vessel diameter = 200 mm) and a typical commercial HPP cycle (pressure = 600 MPa / 6000 bar; holding time = 180 seconds) was performed. It is noteworthy that the pressurizing fluid had an initial temperature of approximately 35-37 °C, different from the 5-25 °C range currently used by the HPP industry.

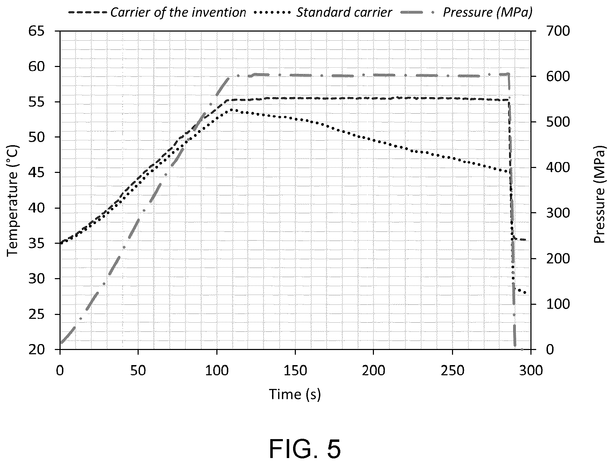

During the compression phase, the temperature of the pressurizing fluid in both carriers increased due to the adiabatic heating generated by the increase in pressure. However, as can be seen in FIG. 5, the increase was slightly higher inside the carrier of the invention. Furthermore, the carrier of the invention successfully kept the reached temperature (approximately 55 °C) stable during the 180 seconds of the pressure holding time. Contrarily, the temperature of the pressurizing fluid inside the standard carrier continuously decreased throughout the holding time, reaching about 10 °C less than the carrier of the invention at the end of the holding time. The pressure release at the end of the cycle led to a correspondent temperature drop of the fluid to approximately the initial temperature in the carrier of the invention, and approximately 10 °C below it in the standard carrier.

### REFERENCES

Balasubramaniam, V. M., Martinez-Monteagudo, S. I., & Gupta, R. (2015). Principles and Application of High Pressure-Based Technologies in the Food Industry. Annual Review of Food Science and Technology, 6(1), 435-462. https://doi.org/10.1146/annurev-food-022814-015539
Bermúdez-Aguirre, D., Corradini, M. G., Candoǧan, K., & Barbosa-Cánovas, G. V. (2016). High Pressure Processing in Combination with High Temperature and Other Preservation Factors. In High Pressure Processing of Food: Principles, Technology and Applications (pp. 193-215). https://doi.org/10.1007/978-1-4939-3234-4 11
González-Angulo, M., Serment-Moreno, V., Queirés, R. P., & Tonello-Samson, C. (2021). Food and Beverage Commercial Applications of High Pressure Processing. In Innovative Food Processing Technologies (pp. 39-73). https://doi.org/10.1016/B978-0-12-815781-7.00009-3
Grauwet, T., Plancken, I. Van der, Vervoort, L., Hendrickx, M. E., & Loey, A. Van. (2010). Mapping temperature uniformity in industrial scale HP equipment using enzymatic pressure-temperature-time indicators. Journal of Food Engineering, 98(1), 93-102. https://doi.org/10.1016/j.jfoodeng.2009.12.014
Morales-de la Peña, M., Salinas-Roca, B., Escobedo-Avellaneda, Z., Martin-Belloso, O., & Welti-Chanes, J. (2018). Effect of High Hydrostatic Pressure and Temperature on Enzymatic Activity and Quality Attributes in Mango Puree Varieties (cv. Tommy Atkins and Manila). Food and Bioprocess Technology, 11(6), 1211-1221. https://doi.org/10.1007/s11947-018-2090-9
Pokhrel, P. R., Toniazzo, T., Boulet, C., Oner, M. E., Sablani, S. S., Tang, J., & Barbosa-Cánovas, G. V. (2019). Inactivation of Listeria innocua and Escherichia coli in carrot juice by combining high pressure processing, nisin, and mild thermal treatments. Innovative Food Science and Emerging Technologies, 54(January 2018), 93-102. https://doi.org/10.1016/j.ifset.2019.03.007

## Claims

1. A carrier to process products by high pressure processing (HPP) and moderate temperatures in horizontal machines wherein the carrier comprises one or more parts that form a cylindrical body and an inner space (3), where the products and pressurizing fluid are accommodated inside, having one or more small openings (4), **characterized in that** said openings (4) are longitudinally distributed through the carrier side wall and the carrier has one or more pieces acting as ballast (5) mounted at the inner wall on the opposite side of the openings, wherein said pieces are coated by one or several sheets (6) of materials whose adiabatic compression heating is higher than the pressurizing fluid.

2. The carrier according to claim 1, wherein the angle between the openings and the ballast pieces is between 135° and 225°.

3. The carrier according to any of the preceding claims, wherein the angle between the openings and the ballast pieces is 180°.

4. The carrier according to any of the preceding claims, wherein the ballast comprises one or more longitudinal pieces made of a material with a density higher than the one of the pressurizing fluid at any given moment.

5. The carrier according to any of the preceding claims, wherein the opening or openings cover less than 1% of the total surface of the carrier.

6. Method for high pressure processing (HPP) products in a horizontal machine, comprising the steps of:
a) loading of the products in one or several carriers, characterized according to any of the preceding claims, wherein the products have an initial temperature between 25°C and 60°C,
b) introducing the carriers inside the high pressure vessel,
c) filling the vessel with the pressurizing fluid, wherein the pressurizing fluid has an initial temperature between 25°C and 60°C,
d) closing the pressure vessel,
e) pumping the pressurizing fluid into the vessel until reaching the desired pressure, in the range of 100 MPa to 800 MPa,
f) maintaining the desired pressure for a few seconds or minutes,
g) releasing the pressure,
h) opening the pressure vessel,
i) unloading of the product carriers,
j) unloading of the products.

7. Method according to claim 6, wherein the products are food, beverage, cosmetic, pharmaceutical, and/or biological substances.

## Patentansprüche

1. Träger zum Verarbeiten von Produkten durch Hochdruckverarbeitung (HPP) und mäßige Temperaturen in horizontalen Maschinen, wobei der Träger ein oder mehr Teile umfasst, die einen zylinderförmigen Körper und einen Innenraum (3), in dessen Innerem die Produkte und druckbeaufschlagendes Fluid aufgenommen werden, mit ein oder mehr kleinen Öffnungen (4) bilden, **dadurch gekennzeichnet, dass** die Öffnungen (4) längs über die Trägerseitenwand verteilt sind und der Träger ein oder mehr als Ballast (5) dienende Stücke hat, die an der Innenwand auf der gegenüberliegenden Seite der Öffnungen montiert sind, wobei die Stücke mit ein oder mehr Lagen (6) an Materialen beschichtet sind, deren adiabatische Kompressionserwärmung höher ist als die des druckbeaufschlagenden Fluids.

2. Träger nach Anspruch 1, wobei der Winkel zwischen den Öffnungen und den Ballaststücken zwischen 135° und 225° liegt.

3. Träger nach einem der vorstehenden Ansprüche, wobei der Winkel zwischen den Öffnungen und den Ballaststücken 180° beträgt.

4. Träger nach einem der vorstehenden Ansprüche, wobei der Ballast ein oder mehr längliche Stücke aus einem Material mit einer Dichte umfasst, die zu jedem gegebenen Moment höher als die druckbeaufschlagenden Fluids ist.

5. Träger nach einem der vorstehenden Ansprüche, wobei die Öffnung oder Öffnungen weniger als 1% der Gesamtfläche des Trägers einnehmen.

6. Verfahren zur Hochdruckverarbeitung (HPP) von Produkten in einer horizontalen Maschine, das die folgenden Schritte umfasst:
a) Laden der Produkte in einen oder mehrere Träger, die gemäß einem der vorstehenden Ansprüche gekennzeichnet sind, wobei die Produkte eine Ausgangstemperatur zwischen 25°C und 60°C haben,
b) Einbringen der Träger in das Innere des Hochdruckbehälters,
c) Füllen des Behälters mit dem druckbeaufschlagenden Fluid, wobei das druckbeaufschlagende Fluid eine Ausgangstemperatur zwischen 25°C und 60°C hat,
d) Schließen des Druckbehälters,
e) Pumpen des druckbeaufschlagenden Fluids in den Behälter, bis er den gewünschten Druck im Bereich von 100 MPa bis 800 MPa erreicht,
f) Aufrechterhalten des gewünschten Drucks für einige Sekunden oder Minuten,
g) Ablassen des Drucks,
h) Öffnen des Druckbehälters,
i) Entladen der Produktträger,
j) Entladen der Produkte.

7. Verfahren nach Anspruch 6, wobei die Produkte Lebensmittel, Getränke, Kosmetika, Pharmazeutika und/oder biologische Substanzen sind.

## Revendications

1. Support pour traiter des produits par traitement à haute pression (THP) et températures modérées dans des machines horizontales, dans lequel le support comprend une ou plusieurs parties qui forment un corps cylindrique et un espace intérieur (3), où les produits et le fluide de pressurisation sont logés à l'intérieur, ayant une ou plusieurs petites ouvertures (4), **caractérisé en ce que** lesdites ouvertures (4) sont réparties longitudinalement à travers la paroi latérale du support et le support a une ou plusieurs pièces agissant comme ballast (5) montées sur la paroi intérieure sur le côté opposé des ouvertures, dans lequel lesdites pièces sont revêtues d'une ou plusieurs feuilles (6) de matériaux dont le chauffage par compression adiabatique est supérieur à celui du fluide de pressurisation.

2. Support selon la revendication 1, dans lequel l'angle entre les ouvertures et les pièces de ballast est entre 135° et 225°.

3. Support selon l'une quelconque des revendications précédentes, dans lequel l'angle entre les ouvertures et les pièces de ballast est 180°.

4. Support selon l'une quelconque des revendications précédentes, dans lequel le ballast comprend une ou plusieurs pièces longitudinales constituées d'un matériau ayant une densité supérieure à celle du fluide de pressurisation à tout moment donné.

5. Support selon l'une quelconque des revendications précédentes, dans lequel l'ouverture ou les ouvertures couvrent moins de 1% de la surface totale du support.

6. Procédé de traitement à haute pression (THP) dans une machine horizontale, comprenant les étapes de :
a) chargement des produits dans un ou plusieurs supports, caractérisés selon l'une quelconque des revendications précédentes, dans lequel les produits ont une température initiale entre 25°C et 60°C,
b) introduction des supports à l'intérieur du récipient haute pression,
c) remplissage du récipient avec le fluide de pressurisation, dans lequel le fluide de pressurisation a une température initiale entre 25°C et 60°C,
d) fermeture du récipient pression,
e) pompage du fluide de pressurisation dans le récipient jusqu'à atteindre la pression souhaitée, comprise dans la plage de 100 MPa à 800 MPa,
f) maintien de la pression désirée pendant quelques secondes ou minutes,
g) relâchement de la pression,
h) ouverture du récipient pression,
i) déchargement des supports de produit,
j) déchargement des produits.

7. Procédé selon la revendication 6, dans lequel les produits sont de la nourriture, de la boisson, des substances cosmétiques, pharmaceutiques, et/ou biologiques.
